# EUROPEAN PATENT APPLICATION

(11) **EP 4 847 960 A1**
(43) Date of publication of application: **02.12.2026**
(21) Application number: 26158656.4
(22) Date of filing: 13.02.2026
(51) Int. Cl.: G01S 13/48, G01S 13/52

(54) **INTERFEROMETRIC RADAR SYSTEM AND RECEPTION DEVICE**

(30) Priority: 30.05.2025 JP 2025090282
(71) Applicant: Hitachi, Ltd., Tokyo 100-8280 (JP)
(72) Inventor: TANABE, Yosuke, Tokyo, 100-8280 (JP); WATANABE, Koichi, Tokyo, 100-8280 (JP); FUNANE, Tsukasa, Tokyo, 100-8280 (JP); KIMURA, Hisatoshi, Tokyo, 100-8280 (JP); ITO, Makoto, Tokyo, 100-8280 (JP); SAITO, Shinichi, Tokyo, 100-8280 (JP)
(74) Representative: Mewburn Ellis LLP

(57) **Abstract**

Under the condition that relative positions of an interferometric radar system and an target object are equal, it is possible to simultaneously receive scattered waves of a plurality of OAM electromagnetic waves. An interferometric radar system includes a transmission device that emits superimposed radio waves obtained by superimposing a first radio wave having a first orbital angular momentum and a second radio wave having a second orbital angular momentum different in OAM order from the first orbital angular momentum on each other, and a reception device that receives scattered waves, which are the superimposed radio waves emitted to irradiate a target object and scattered thereby, calculates an interference state between a first radio wave component corresponding to the scattered wave of the first radio wave and a second radio wave component corresponding to the scattered wave of the second radio wave in the scattered waves, and calculates at least one of a scattering characteristic, a distance, and an azimuth angle of the target object.

## Description

### CROSS-REFERENCE TO RELATED APPLICATION

This application claims priority to Japanese Patent Application No. 2025-090282 filed on May 30, 2025, the entire contents of which are incorporated by reference herein.

### BACKGROUND OF THE INVENTION

The present invention relates to an interferometric radar system and a reception device.

An electromagnetic wave is emitted as a result of accelerated movement of electrons, absorbed or scattered by various atoms in the process of propagation, and induces emission of a new electromagnetic wave. At that time, the electromagnetic wave gains various information through the exchange of momenta in interaction with objects, and is therefore used for various applications such as radar imaging, object detection, and the like.

In recent years, a radar technology using an electromagnetic wave having an Orbital Angular Momentum (OAM) (hereinafter referred to as the OAM radio wave) has drawn attention. The OAM radio wave has a phase in an azimuth angle direction which rotates by 2 πL radians in a plane perpendicular to a direction of travel (where L is the mode order of the OAM (OAM order), and L = ±1, ±2, ... is satisfied). According to the disclosure in China Patent Application Publication No. 113281743, by sequentially irradiating a target object with a plurality of OAM radio waves with different OAM modes and receiving scattered waves, it is possible to detect the distance and azimuth angle direction of the target object.

### SUMMARY OF THE INVENTION

According to the disclosure in China Patent Application Publication No. 113281743, the target object is sequentially irradiated with the plurality of OAM radio waves with the different OAM modes and accordingly, when a radar system and the target object move, conditions with regard to relative positions of the radar system and the target object change for each of received signals. This degrades accuracy of detection of the distance and azimuth angle direction of the target object.

An interferometric radar system as a first aspect of the present invention includes: a transmission device that emits superimposed radio waves obtained by superimposing a first radio wave having a first orbital angular momentum and a second radio wave having a second orbital angular momentum different in OAM order from the first orbital angular momentum on each other; and a reception device that receives scattered waves, which are the superimposed radio waves emitted to irradiate a target object and scattered thereby, calculates an interference state between a first radio wave component corresponding to the scattered wave of the first radio wave and a second radio wave component corresponding to the scattered wave of the second radio wave in the scattered waves, and calculates at least one of a scattering characteristic, a distance, and an azimuth angle of the target object.

Under the condition that the relative positions of the interferometric radar system and the target object are equal, it is possible to simultaneously receive scattered waves of a plurality of OAM electromagnetic waves. Other problems and novel features become clear from the description of the present description and the accompanying drawings.

### BRIEF DESCRIPTION OF THE DRAWINGS

Fig. 1 illustrates an example of a configuration of an interferometric radar system.
Fig. 2A illustrates an example of a hardware configuration of a transmission arithmetic unit.
Fig. 2B is a block diagram of a transmission arithmetic unit.
Fig. 3 is a diagram for illustrating orbital angular momentum states of superimposed radio waves.
Fig. 4 illustrates an example of a configuration of antennas.
Fig. 5 is a flow chart of measurement by the interferometric radar system.
Fig. 6A is a diagram illustrating a geometrical relationship between the interferometric radar system and a target object.
Fig. 6B is a block diagram of a reception device according to a second embodiment.
Fig. 7 is a diagram illustrating a target object distance and a target object scattering characteristic each calculated according to the second embodiment.
Fig. 8 is a diagram illustrating a target object position calculated according to the second embodiment.
Fig. 9 is a block diagram of an interference state calculation unit according to a third embodiment.
Fig. 10 is a diagram illustrating a moving speed of the target object calculated according to the third embodiment.
Fig. 11 is a block diagram of the transmission arithmetic unit according to a fourth embodiment.
Fig. 12 is a diagram for illustrating the orbital angular momentum states of the superimposed radio waves.
Fig 13 illustrates a result of performing frequency analysis of scattered waves from the superimposed radio waves in a fourth embodiment.
Fig. 14 is a diagram illustrating a first implementation form of the interferometric radar system.
Fig. 15 is a diagram illustrating a second implementation form of the interferometric radar system.
Fig. 16 is a diagram illustrating a third implementation form of the interferometric radar system.
Fig. 17 is a diagram illustrating a fourth implementation form of the interferometric radar system.

### DETAILED DESCRIPTION OF THE PREFERRED EMBODIMENTS

An interferometric radar system in the present embodiment is configured to superimpose a plurality of OAM radio waves with different OAM orders on each other, irradiate a target object with the superimposed OAM radio waves, and simultaneously receive a plurality of scattered waves having equal conditions with regard to relative positions of the radar system and the target object.

### First Embodiment

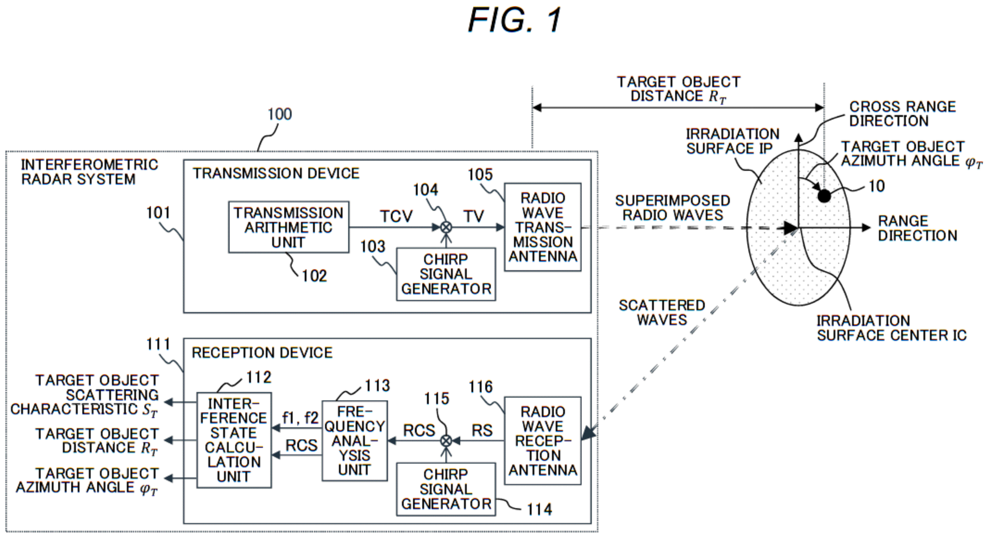

Fig. 1 illustrates an example of a configuration of the interferometric radar system. An interferometric radar system 100 includes a transmission device 101 that transmits, to a target object 10, superimposed waves obtained by superimposing a first radio wave having a first orbital angular momentum and a second radio wave having a second orbital angular momentum different in OAM order from the first orbital angular momentum, and a reception device 111 that receives scattered waves, which are the superimposed radio waves emitted to irradiate the target object 10 and scattered thereby, separates, from the scattered waves, a first radio wave component corresponding to the scattered wave of the first radio wave and a second radio wave component corresponding to the scattered wave of the second radio wave, and calculates an interference state therebetween to calculate at least one or more of a scattering characteristic, a distance, and an azimuth angle of the target object. It is to be noted herein that the radio waves received by the reception device 111, which are the superimposed radio waves emitted from the transmission device 101 and subjected to interaction with the target object 10, are representatively referred to as the scattered waves, and the interaction is not limited to a specific interaction.

The transmission device 101 includes a transmission arithmetic unit 102 that generates a transmission complex signal vector TCV representing a superimposed state of the first radio wave and the second wave, a transmission multiplier 104 that multiplies the transmission complex signal vector TCV by a chirp signal generated by a chirp signal generator 103 and having a time-varying frequency to generate a transmission signal vector TV, and a radio wave transmission antenna 105 that emits the superimposed radio waves obtained by superimposing the first radio wave and the second radio wave on each other. The reception device 111 includes a radio wave reception antenna 116 that converts the received scattered waves to a reception signal RS, a reception multiplier 115 that multiplies the reception signal RS by a chirp signal generated by a chirp signal generator 114 to generate a reception complex signal RCS, a frequency analysis unit 113 that detects, from the reception complex signal RCS, a first frequency f1 corresponding to the scattered wave of the first radio wave and a second frequency f2 corresponding to the scattered wave of the second radio wave, and an interference state calculation unit 112 that calculates an interference state between a first radio wave frequency component having the first frequency f1 and a second radio wave frequency component having the second frequency f2, and calculates at least one or more of the scattering characteristic, the distance, and the azimuth angle of the target object 10. Note that the frequency variation of the chirp signal generated by the chirp signal generator 103 is the same as the frequency variation of the chirp signal generated by the chirp signal generator 114.

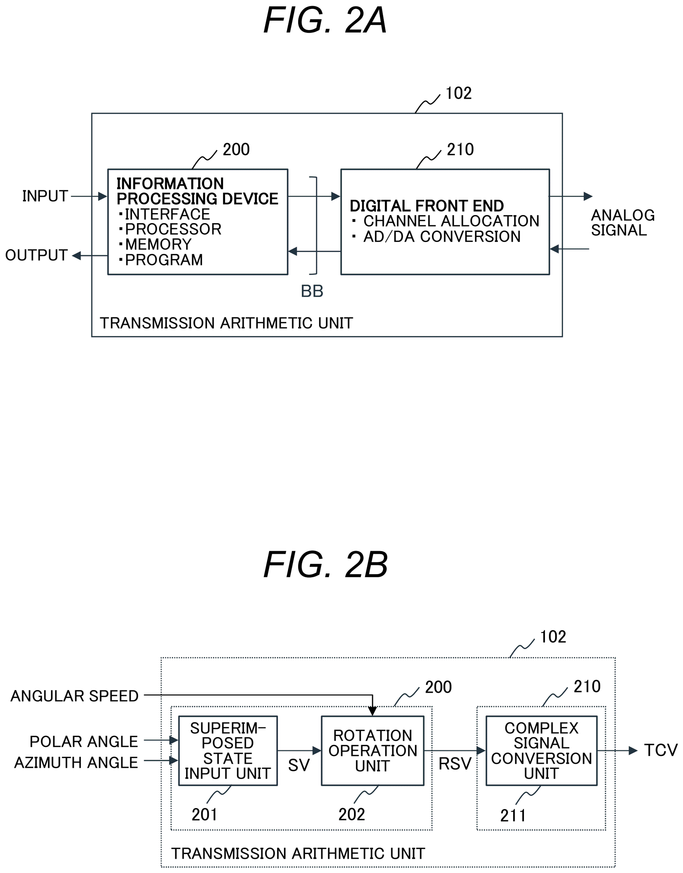

Fig. 2A illustrates a hardware configuration of the transmission arithmetic unit 102. A main hardware component of the transmission arithmetic unit 102 is a processor or an information processing device (computer) configured to include the processor or the like. A processor of an information processing device 200 uses data input thereto via an interface to perform arithmetic processing according to a program read onto a memory. As the processor, not only a CPU, but also a GPU (Graphical Processing Unit), a DSP (Digital Signal Processor), or the like may also be used. Meanwhile, the processing for implementing the function of the transmission arithmetic unit 102 is not limited to software program processing, and can also be implemented by using a dedicated circuit such as a FPGA or ASIC.

A baseband signal BB, which is an output of the information processing device 200, is sent to a digital front end 210, subjected to channel allocation performed according to the number of channels of the radio wave transmission antenna 105, and then subjected to DA conversion to be converted to the transmission complex signal vector TCV, which is an analog signal.

Fig. 2B is a block diagram of the transmission arithmetic unit 102. The transmission arithmetic unit 102 includes a superimposed state input unit 201 that receives inputs of a polar angle and an azimuth angle on a spherical surface on which a first orbital angular momentum state is disposed at the north pole and a second orbital angular momentum state is disposed at the south pole to generate a superimposed state vector SV representing the superimposed state of the first radio wave and the second radio wave, a rotation operation unit 202 that performs a rotation operation on the superimposed state vector SV on the basis of an angular speed input thereto to generate a rotated superimposed state vector RSV, and a complex signal conversion unit 211 that converts the rotated superimposed state vector RSV to the transmission complex signal vector TCV according to the radio wave transmission antenna 105. The superimposed state input unit 201 and the rotation operation unit 202 are implemented in the information processing device 200, and the complex signal conversion unit 211 is implemented in the digital front end 210.

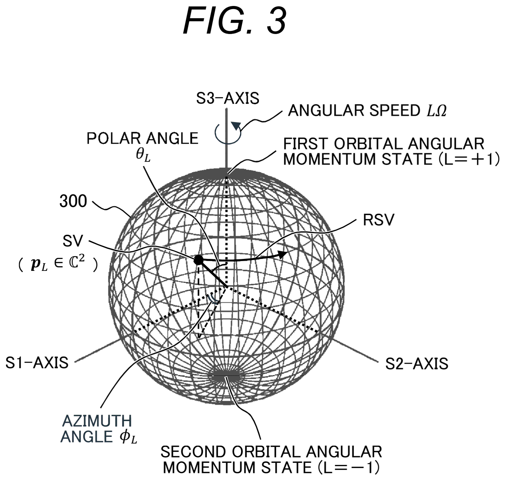

Fig. 3 illustrates the spherical surface on which the first orbital angular momentum state is disposed at the north pole and the second orbital angular momentum state is disposed at the south pole, and it is assumed that, for example, the first orbital angular momentum state has an OAM order L = +1, and the second orbital angular momentum state has the OAM order L = -1. The superimposed state input unit 201 generates a superimposed state vector p_{L} represented as (Numerical Expression 1) on the basis of an azimuth angle ϕ_{L} (0 ≤ ϕ_{L} < 2π) and a polar angle θ_{L} (0 ≤ θ_{L} <π) input via the interface.
(Numerical Expression 1) ${p}_{L} = \left[\begin{matrix}{e}^{- i \frac{{ϕ}_{L}}{2}} cos \frac{{θ}_{L}}{2} \\ {e}^{i \frac{{ϕ}_{L}}{2}} sin \frac{{θ}_{L}}{2}\end{matrix}\right]$ (1) where,
***ϕ_{L}* ∈ [0,*2π*), *θ_{L}* ∈ [0, *π*]**

The superimposed state vector SV (p_{L}) can be represented as one point on a spherical surface 300 shown in Fig. 3. Next, the rotation operation unit 202 multiplies (Numerical Expression 1) by a complex rotation matrix D to generate the rotated superimposed state vector RSV shown in (Numerical Expression 2). Here, LΩ [rad/s] is the angular speed input via the interface, t [s] is time, and n is a rotating direction vector.$\hat{D} \left(\hat{n}, LΩt\right) ⋅ {p}_{L}$ (Numerical expression 2) provided that, $\hat{D} ∈ {ℂ}^{2 \times 2}$ where, $\hat{D} \left(\hat{n}, LΩt\right) = 1 cos \left(\frac{LΩt}{2}\right) - iσ ⋅ \hat{n} sin \left(\frac{LΩt}{2}\right)$ $1 = \left[\begin{matrix}1 & 0 \\ 0 & 1\end{matrix}\right] , σ = \left({σ}_{1}, {σ}_{2}, {σ}_{3}\right) ,$ ${σ}_{1} = \left[\begin{matrix}0 & 1 \\ 1 & 0\end{matrix}\right] , {σ}_{2} = \left[\begin{matrix}0 & - i \\ i & 0\end{matrix}\right] , {σ}_{3} = \left[\begin{matrix}1 & 0 \\ 0 & - 1\end{matrix}\right] .$ (2)

When the spherical surface 300 is rotated around an S3-axis serving as a rotation axis, i.e., the spherical surface 300 is rotated in an equator direction, the rotated superimposed state vector RSV (p_{L}(t)) is represented by (Numerical Expression 3). Thus, it will be understood that a component of the rotated superimposed state vector RSV (p_{L}(t)) that represents the first radio wave has a value obtained by multiplying a component of the superimposed state vector SV(p_{L}) that represents the first radio wave by e^{iLΩt/2}, and a component of the rotated superimposed state vector RSV (p_{L}(t)) that represents the second radio wave has a value obtained by multiplying a component of the superimposed state vector SV (p_{L}) that represents the second radio by an e^{-iLΩt/2}. This indicates that the frequency of the first radio wave has shifted in a positive direction, and the frequency of the second radio wave has shifted in a negative direction. In the present embodiment, by rotating the superimposed state vector SV (p_{L}), the respective frequency shifts in the different directions occurring in the first radio wave and the second radio wave are used for analysis of the scattered waves described later.
(Numerical Expression 3) ${p}_{L} \left(t\right) = \left[\begin{matrix}{e}^{- i \left(\frac{{ϕ}_{L} - LΩt}{2}\right)} cos \frac{{θ}_{L}}{2} \\ {e}^{i \left(\frac{{ϕ}_{L} - LΩt}{2}\right)} sin \frac{{θ}_{L}}{2}\end{matrix}\right] = \left[{e}^{\frac{iL Ω t}{2}} {e}^{- \frac{iL Ω t}{2}}\right] {p}_{L}$ (3)

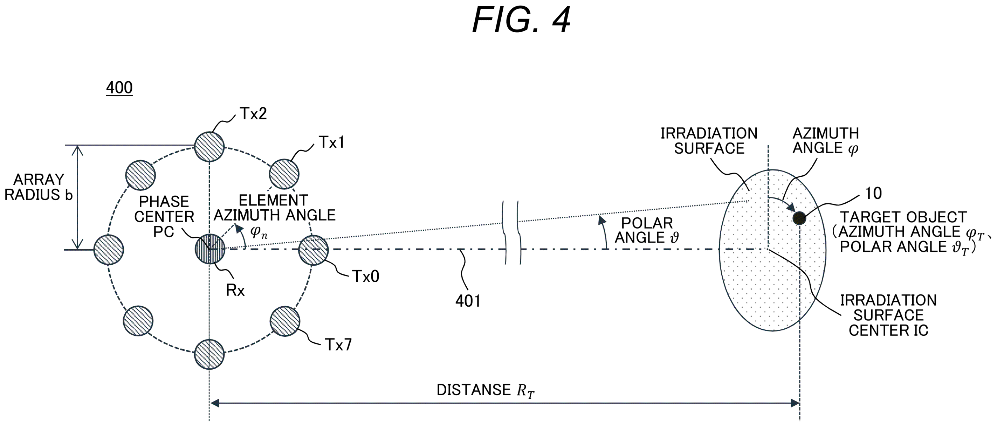

Fig. 4 illustrates an example of a configuration of antennas used as the radio wave transmission antenna 105 and the radio wave reception antenna 116. Note, as the configuration of the antennas that transmit the radio waves having the orbital angular momenta, another configuration can also be considered, and the configuration of the antennas is not limited to the configuration in Fig. 4. An antenna 400 emits the superimposed radio waves by using a circular array which has an array radius b and in which N-channel antenna elements Txn (n = 0 to N-1) are evenly arranged, and receives the scattered waves returned from the target object 10 by using an antenna element Rx disposed at a phase center PC of the circular array. Here, an example in which N = 8 is satisfied is shown.

Subsequently, the complex signal conversion unit 211 determines a product of the rotated superimposed state vector RSV (p_{L}(t)) represented by (Numerical Expression 3) and a conversion matrix IQ_{L} represented by (Numerical Expression 4) to generate the transmission complex signal vector TCV. The conversion matrix IQ_{L} depends on a structure of the radio wave transmission antenna 105, and the conversion matrix IQ_{L} corresponding to the antenna 400 is shown herein. Here, φₙ is an element azimuth angle of the circular array, and φₙ = 2 πn/(N+1) (n = 0 to N-1) is satisfied. The transmission complex signal vector TCV is represented by (Numerical Expression 5).
(Numerical Expression 4) ${IQ}_{L} = \left[\begin{matrix}{e}^{{iLφ}_{0}} & {e}^{- {iLφ}_{0}} \\ {e}^{{iLφ}_{1}} & {e}^{- {iLφ}_{1}} \\ ⋮ & ⋮ \\ {e}^{{iLφ}_{N - 1}} & {e}^{- {iLφ}_{N - 1}}\end{matrix}\right]$ (4)
(Numerical Expression 5) ${IQ}_{L} {p}_{L} \left(t\right) = \left[\begin{matrix}{e}^{{iLφ}_{0}} & {e}^{- {iLφ}_{0}} \\ {e}^{{iLφ}_{1}} & {e}^{- {iLφ}_{1}} \\ ⋮ & ⋮ \\ {e}^{{iLφ}_{N - 1}} & {e}^{- {iLφ}_{N - 1}}\end{matrix}\right] \left[\begin{matrix}{e}^{- i \left(\frac{{ϕ}_{L} - LΩt}{2}\right)} cos \frac{{θ}_{L}}{2} \\ {e}^{i \left(\frac{{ϕ}_{L} - LΩt}{2}\right)} sin \frac{{θ}_{L}}{2}\end{matrix}\right]$ (5)

Subsequently, by multiplying the transmission complex signal vector TCV by the chirp signal by using the transmission multiplier 104, the transmission signal vector TV to be fed to the radio wave transmission antenna 105 is obtained. The transmission signal vector TV (s_{L} (t)) is represented by (Numerical Expression 6). Here, f_{c} [Hz] is a center frequency of a radio wave, τ [s] is a chirp pulse width and satisfies µ = B/τ [Hz/s], and B [Hz] is a chirp bandwidth.
(Numerical Expression 6) $\begin{matrix}{s}_{L} \left(t\right) = {e}^{i 2 π \left({f}_{c}t+\frac{μ}{2}{t}^{2}\right)} \left[\begin{matrix}{e}^{{iLφ}_{0}} & {e}^{- {iLφ}_{0}} \\ {e}^{{iLφ}_{1}} & {e}^{- {iLφ}_{1}} \\ ⋮ & ⋮ \\ {e}^{{iLφ}_{N - 1}} & {e}^{- {iLφ}_{N - 1}}\end{matrix}\right] \left[\begin{matrix}{e}^{- i \left(\frac{{ϕ}_{L} - LΩt}{2}\right)} cos \frac{{θ}_{L}}{2} \\ {e}^{i \left(\frac{{ϕ}_{L} - LΩt}{2}\right)} sin \frac{{θ}_{L}}{2}\end{matrix}\right] \\ 0 \leq t \leq τ\end{matrix}$ (6)

Finally, the first radio wave and the second radio wave superimposed on each other are emitted from the radio wave transmission antenna 105 and, at a distance r sufficiently large with respect to the array radius b of the antenna 400, an electric field based on the superimposed radio waves shown in (Numerical Expression 7) is generated.
(Numerical Expression 7) $\begin{matrix}E \left(r, φ, ϑ, t\right) = {Ae}^{i 2 π \left\{{f}_{c}\left(t-{t}_{0}\right)+\frac{μ}{2}{\left(t-{t}_{0}\right)}^{2}\right\}} \\ \left[{e}^{i \left\{\frac{LΩ}{2}\left(t-{t}_{0}\right)\right\}}{e}^{- i \frac{{ϕ}_{L}}{2}}cos\frac{{θ}_{L}}{2}{e}^{iLφ}+{e}^{i \left\{-\frac{LΩ}{2}\left(t-{t}_{0}\right)\right\}}{e}^{i \frac{{ϕ}_{L}}{2}}sin\frac{{θ}_{L}}{2}{e}^{- iLφ}\right]\end{matrix}$ (7) where, $A = {i}^{L} {J}_{L} \left(kb sin ϑ\right) {Ne}^{- ikr} / r$

Here, t₀ [s] is a time lag due to propagation by the distance r, k is a wave number, J_{L} () is an L-th order Bessel function of the first kind, and φ and θ are an azimuth angle and a polar angle using the phase center PC of the radio wave transmission antenna 105 as an origin. As shown in Fig. 4, in the case of the antenna 400, the phase center PC is a center position of the circular array, and each of the azimuth angle φ and the polar angle θ is determined on the basis of a straight line 401 extended from the phase center PC in a direction of irradiation.

The superimposed radio waves emitted from the radio wave transmission antenna 105 are scattered by the target object 10, and the scattered waves are received by the reception device 111. The reception device 111 also has the same hardware configuration as the hardware configuration shown in Fig. 2A, converts the reception complex signal RCS, which is an analog signal, to a digital signal by using the digital front end, and performs signal processing corresponding to the functions of the frequency analysis unit 113 and the interference state calculation unit 112 by using the information processing device. Hereinbelow, it is assumed that the scattered waves scattered by the target object 10 at a distance R_{T}, the azimuth angle φ_{T}, and the polar angle θ_{T} are received by the antenna 400 shown in Fig. 4. The reception signal RS received by the radio wave reception antenna 116 is represented by (Numerical Expression 8).
(Numerical Expression 8) $\begin{matrix}{s}_{R} \left(t\right) = A ′ {e}^{i 2 π \left\{{f}_{c}\left(t-{t}_{T}\right)+\frac{μ}{2}{\left(t-{t}_{T}\right)}^{2}\right\}} \\ \left[{e}^{i \left\{\frac{LΩ}{2}\left(t-{t}_{T}\right)\right\}}{e}^{- i \frac{{ϕ}_{L}}{2}}cos\frac{{θ}_{L}}{2}{e}^{{iLφ}_{T}}+{e}^{i \left\{-\frac{LΩ}{2}\left(t-{t}_{T}\right)\right\}}{e}^{i \frac{{ϕ}_{L}}{2}}sin\frac{{θ}_{L}}{2}{e}^{- {iLφ}_{T}}\right]\end{matrix}$ (8) where, $A ′ = {i}^{L} {J}_{L} \left(kb sin {ϑ}_{T}\right) {Ne}^{- {ikR}_{T}} / {R}_{T}$

Here, c [m/s] is a light speed, t_{T} is a time lag of the scattered waves from the target object 10, which satisfies t_{T} = 2R_{T}/c [s]. Subsequently, by multiplying the reception signal RS (s_{R}(t)) by the chirp signal represented by (Numerical Expression 9) by using the reception multiplier 115, the reception complex signal RCS (s₀(t)) represented by (Numerical Expression 10) is obtained. Here, * is an operator that returns a complex conjugate, t_{ref} [s] is a time lag related to a reference distance R_{ref} when the distance of the target object is determined.
(Numerical Expression 9) ${s}_{ref} \left(t\right) = {e}^{i 2 π \left\{{f}_{c}\left(t-{t}_{ref}\right)+\frac{μ}{2}{\left(t-{t}_{ref}\right)}^{2}\right\}}$ (9)
(Numerical Expression 10) $\begin{matrix}{s}_{0} \left(t\right) = {s}_{ref} \left(t\right) ⋅ {s}_{R}^{∗} \left(t\right) \\ = A ′ * {e}^{i 2 π \left\{{f}_{c}\left({t}_{T}-{t}_{ref}\right)+μt\left({t}_{T}-{t}_{ref}\right)-\frac{LΩ}{4 π}\left(t-{t}_{T}\right)+\frac{μ}{2}\left({t}_{ref}^{2}-{t}_{T}^{2}\right)\right\}} {e}^{i \frac{{ϕ}_{L}}{2}} cos \frac{{θ}_{L}}{2} {e}^{- {iLφ}_{T}} \\ + A ′ * {e}^{i 2 π \left\{{f}_{c}\left({t}_{T}-{t}_{ref}\right)+μt\left({t}_{T}-{t}_{ref}\right)+\frac{LΩ}{4 π}\left(t-{t}_{T}\right)+\frac{μ}{2}\left({t}_{ref}^{2}-{t}_{T}^{2}\right)\right\}} {e}^{- i \frac{{ϕ}_{L}}{2}} sin \frac{{θ}_{L}}{2} {e}^{{iLφ}_{T}}\end{matrix}$ (10)

As described above, the first radio wave and the second radio wave are superimposed as radio waves having different frequencies on each other and emitted, and therefore the scattered wave of the first radio wave and the scattered wave of the second radio wave are contained as different frequency components in the reception complex signal RCS (s₀(t)). The frequency analysis unit 113 performs frequency analysis of the reception complex signal RCS (s₀(t)), and obtains a first frequency f1 (f+_{L}) corresponding to the scattered wave of the first radio wave and a second frequency f2 (f-_{L}) corresponding to the scattered wave of the second radio wave each represented by (Numerical Expression 11).
(Numerical Expression 11) ${f}_{\pm L} = μ \left({t}_{T}-{t}_{ref}\right) ∓ \frac{LΩ}{4 π}$ (11)

(Numerical Expression 11) means that first frequency f+_{L} and second frequency f-_{L} are frequencies resulting from shifting by LΩ/4π [Hz] in opposite directions from a peak frequency fₚ (= µ(t_{T}-t_{ref})). Accordingly, the interference state calculation unit 112 sets the first radio wave frequency component of the first frequency f+_{L} and the second radio wave frequency component of the second frequency f-_{L} in the reception signal RS (s_{R}(t)) at the same value to thereby calculate a mutual interference state in a frequency space and calculate the scattering characteristic, the distance, and the azimuth angle of the target object 10. Note that, as shown in Fig. 1, a surface on which the target object 10 is present is referred to as an irradiation surface IP, and a center position thereof is an irradiation surface center IC. In addition, a direction extending from the phase center PC of the antenna to the irradiation surface center IC over the irradiation surface IP is referred to as a range direction, and a direction perpendicular to the range direction is referred to as a cross range direction, and an angle of the target object using the cross range direction as a reference orientation is referred to as a target object azimuth angle.

Specifically, spectrum correlation represented by (Numerical Expression 12) is calculated for the reception complex signal RCS (s₀(t)) having the first radio wave frequency component and the second radio wave frequency. By multiplying the reception signal s_{R}(t) by e^{iLΩt/2} indicating a LΩ/4π frequency shift and e^{-iLΩt/2} indicating a -LΩ/4π frequency shift respectively, the interference state between the first radio wave frequency component and the second radio wave frequency component appears in the spectrum correlation.
(Numerical Expression 12) $\begin{matrix}{SC}^{\frac{LΩ}{2}} \left(f\right) = FFT \left[{s}_{ref}\left(t\right)⋅{\left\{{s}_{R}\left(t\right){e}^{i \frac{LΩ}{2} t}\right\}}^{∗}\right] \\ ⋅ FFT * \left[{s}_{ref}\left(t\right)⋅{\left\{{s}_{R}\left(t\right){e}^{- i \frac{LΩ}{2} t}\right\}}^{∗}\right]\end{matrix}$ (12)

The spectrum correlation determined by using (Numerical Expression 12) has a frequency component represented by (Numerical Expression 13) at the peak frequency fₚ.
(Numerical Expression 13) ${SC}^{\frac{LΩ}{2}} \left({f}_{p}\right) = {\left|A′\right|}^{2} sin \frac{{θ}_{L}}{2} cos \frac{{θ}_{L}}{2} {e}^{- {iϕ}_{L}} {e}^{- {iLΩt}_{T}} {e}^{2 {iLφ}_{T}}$ (13)

On the basis of the peak frequency fₚ, the target object distance R_{T} is determined by using (Numerical Expression 14).
(Numerical Expression 14) ${R}_{T} = \frac{c}{2} \left(\frac{1}{μ}{f}_{p}+{t}_{ref}\right)$ (14)

On the basis of the amplitude and some of phase components of the spectrum correlation at the peak frequency fₚ, the target object scattering characteristic S_{T} is determined by using (Numerical Expression 15). Note that the scattering characteristic is a characteristic indicating to which degree the target object scatters the radio waves.
(Numerical Expression 15) ${S}_{T} = {\left|A′\right|}^{2} sin \frac{{θ}_{L}}{2} cos \frac{{θ}_{L}}{2} {e}^{- {iϕ}_{L}}$ (15)

On the basis of some of the phase components of the spectrum correlation at the peak frequency fₚ, the target object azimuth angle φT is determined by using (Numerical Expression 16). Here, arg () is a function that returns an argument of a complex number.
(Numerical Expression 16) ${φ}_{T} = arg \left({e}^{2 {iLφ}_{T}}\right) / 2 L$ (16)

Thus, the interferometric radar system 100 in the first embodiment superimposes the plurality of OAM radio waves with the different modes on each other, irradiates the target object 10 with the superimposed OAM radio waves, and analyzes the scattered waves from the target object 10, and can thus determine at least one of the scattering characteristic, the distance, and the azimuth angle of the target object 10 under the condition that the relative positions of the system 100 and the target object 10 are equal.

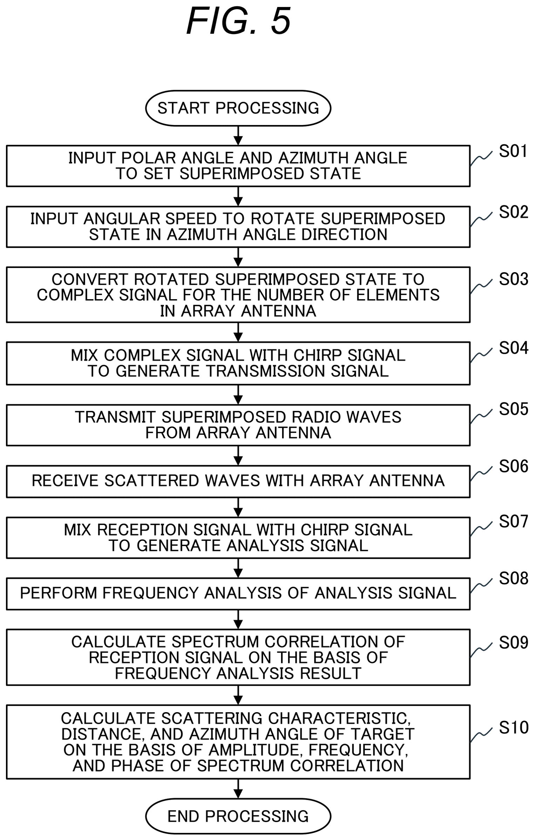

Fig. 5 is a flow chart illustrating processing of measuring the target object 10 by using the interferometric radar system 100 in the first embodiment. Processing related to transmission of the superimposed radio waves by the transmission device 101 corresponds to steps S01 to S05. Via the interface of the information processing device 200, the polar angle and the azimuth angle are input, the superimposed state input unit 201 sets the superimposed state of the first radio wave and the second radio wave (S01), and the rotation operation unit 202 inputs the angle speed to thereby rotate the superimposed state in the azimuth angle direction (the equator direction of the spherical surface 300 shown in Fig. 3) (S02). The complex signal conversion unit 211 converts the rotated superimposed state to a complex signal for the number of the elements in the array antenna (S03), and the transmission multiplier 104 mixes the complex signal with the chirp signal to generate the transmission signal (S04), and transmits the superimposed radio waves from the array antenna (S05).

Processing related to the reception and analysis of the scattered waves by the reception device 111 corresponds to steps S06 to S10. The scattered waves are received via the array antenna (S06), the reception multiplier 115 mixes the reception signal with the chirp signal to generate an analysis signal (S07), and the frequency analysis unit 113 performs the frequency analysis of the analysis signal (S08). The interference state calculation unit 112 uses a frequency analysis result to calculate the spectrum correlation of the reception signal, i.e., the spectrum correlation between the frequency component corresponding to the scattered wave of the first radio wave and the frequency component corresponding to the scattered wave of the second radio wave in the analysis signal (S09), and calculates at least one of the scattering characteristic, the distance, and the azimuth angle of the target (target object) on the basis of the amplitude, frequency, and phase of the spectrum correlation (S10).

### Second Embodiment

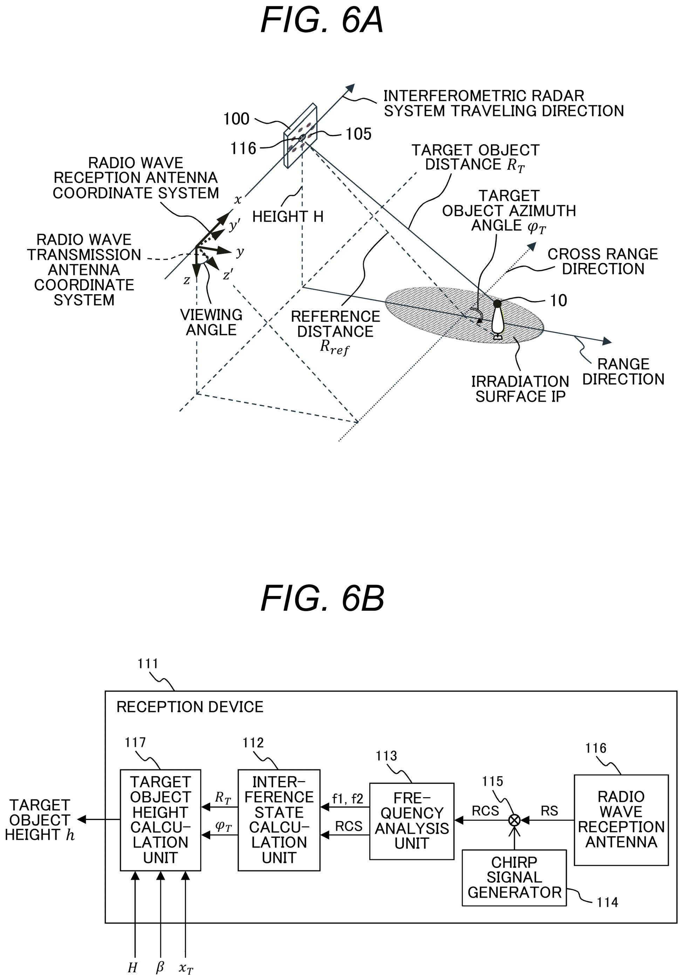

In a second embodiment, a description will be given of three-dimensional observation using the interferometric radar system 100. From the target object distance R_{T} and the target object azimuth angle φ_{T} each acquired by the interferometric radar system 100, height information of the target object can be obtained. It is assumed that each of the radio wave transmission antenna 105 and the radio wave reception antenna 116 has a configuration of the antenna 400 shown in Fig. 4. Fig. 6A illustrates a geometrical relationship between the interferometric radar system 100 and the target object 10 according to the second embodiment. The interferometric radar system 100 is mounted in, e.g., a spacecraft, an aircraft, or the like.

The radio wave reception antenna 116 is represented by an xyz-coordinate system based on the phase center PC, in which an x-axis is a direction of travel of the interferometric radar system 100, and a z-axis is an above-ground direction. Meanwhile, the radio wave transmission antenna 105 is represented by an x'y'z'-coordinate system based on the phase center PC, in which a y'-axis and a z'-axis have rotated by a viewing angle β around the x-axis. The z'-axis is a direction of travel of the superimposed radio waves. When the viewing angle is β [rad], the xyz-coordinate system and the x'y'z' coordinate system are represented by (Numerical Expression 17).
(Numerical Expression 17) $\begin{matrix}x ′ = x \\ y ′ = y cos β - z sin β \\ z ′ = y sin β + z cos β\end{matrix}$ (17)

It is assumed herein that, at a point (x_{T}, y_{T}, z_{T}) away from the interferometric radar system 100 at a height H by the distance R_{T}, the target object 10 represented by the xyz-coordinate system is present. The target object distance R_{T} and the target object azimuth angle φ_{T}, which are obtained by irradiating the target object 10 with the superimposed radio waves and receiving and analyzing the scattered waves, are given by (Numerical Expression 18).
(Numerical Expression 18) $\begin{matrix}{R}_{T} = \sqrt{{z}_{T}^{2} + {y}_{T}^{2}} \\ {φ}_{L} = {tan}^{- 1} \frac{y {′}_{T}}{{x}_{T}}\end{matrix}$ (18)

A target object height h, which satisfies h = H-z_{T}, is represented by (Numerical Expression 19) on the basis of (Numerical Expression 17) and (Numerical Expression 18).
(Numerical Expression 19) $h = H + {x}_{T} {tanφ}_{T} sin β - cos β \sqrt{{R}_{T}^{2} - {x}_{T}^{2} {tan}^{2} {φ}_{T}}$ (19)

Here, the height H, the viewing angle β, and an x_{T}-coordinate of the target object are known in radar imaging as shown in Fig. 6A. Therefore, by acquiring the target object distance R_{T} and the target object azimuth angle φ_{T} for the target object 10, the interferometric radar system 100 can calculate the height h of the target object 10. Fig. 6B illustrates a block diagram of the reception device 111 including a target object height calculation unit 117 that calculates the height h of the target object 10.

The following shows an example in which, by using the interferometric radar system 100 disposed at the height H = 500 km and the viewing angle β = 30 [deg], the height information of the target object 10 is obtained. It is assumed herein that the target object 10 is a point scatterer at three points A, B, and C having respective scattering cross-sectional areas and positions in the xyz-coordinate system, the point A has a scattering cross-sectional area of √0.4 m² and is located at (100, Htanβ+300, H-20), the point B has a scattering cross-sectional area of √0.6 m² and is located at (100, Htanβ+300, H-10), and the point C has a scattering cross-sectional area of √0.8 m² and is located at (100, Htanβ+300, H-50). By the interferometric radar system 100, the OAM radio waves having pulse widths of 0.03 µs, center frequencies of 10 GHz, chirp bandwidths of 400 MHz, and orders of +1 and -1 are evenly superimposed on each other to irradiate the target object, and the scattered waves from the target object are determined by simulation and analyzed in accordance with a method in the second embodiment.

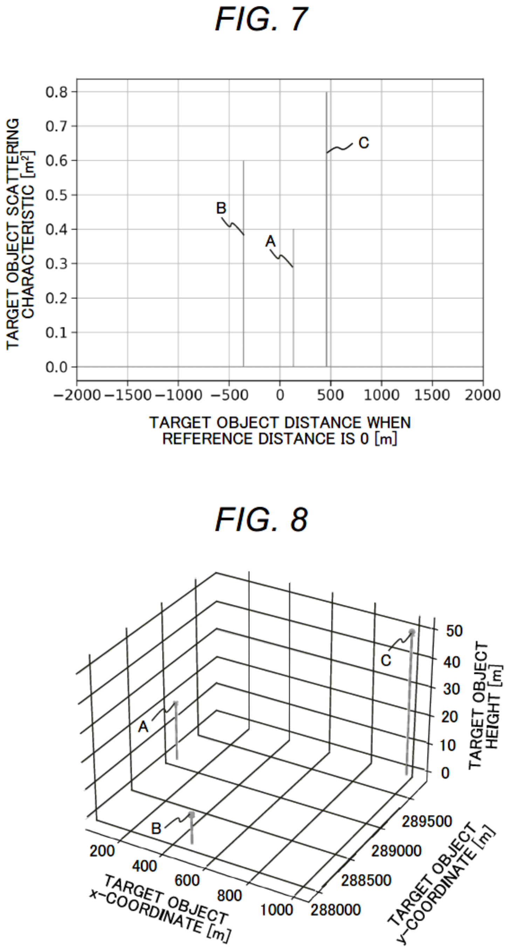

In Fig. 7, the abscissa represents the target object distance R_{T} calculated by using (Numerical Expression 14) when the reference distance R_{ref} (H/cosβ) is 0, and the ordinate represents the target object scattering characteristic S_{T} calculated by using (Numerical Expression 15). In addition, since the target object azimuth angle is obtained by using (Numerical Expression 16), a result of determining the target object height h by using (Numerical Expression 19) is shown in Fig. 8.

In Fig. 8, the x-axis and the y-axis represent the xy-coordinates of the target object, and the z-axis represents the target object height. The circle marks represent the positions and heights of the given point scatterers A, B, and C, and the cross marks represent the positions and heights of the point scatterers A, B, and C determined by the interferometric radar system 100 according to the second embodiment, and both of the positions and heights substantially overlap each other. An error was about 1%. Thus, the interferometric radar system 100 in the second embodiment can obtain the height information of the target object. The height information can be used for infrastructure monitoring, vegetation management, and the like by observing a change rate thereof.

### Third Embodiment

In a third embodiment, a description will be given of detection of a moving speed of the target object by the interferometric radar system 100. The target object to be observed in the third embodiment is a moving body having the target object azimuth angle φ_{T} that changes with time t. In this case, the reception complex signal RCS (s₀(t)) is represented by (Numerical Expression 20).
(Numerical Expression 20) $\begin{matrix}{s}_{0} \left(t\right) = {s}_{ref} \left(t\right) ⋅ {s}_{R}^{∗} \left(t\right) \\ = A ′ * {e}^{i 2 π \left\{{f}_{c}\left({t}_{T}-{t}_{ref}\right)+μt\left({t}_{T}-{t}_{ref}\right)-\frac{LΩ}{4 π}\left(t-{t}_{T}\right)+\frac{μ}{2}\left({t}_{ref}^{2}-{t}_{T}^{2}\right)\right\}} {e}^{i \frac{{ϕ}_{L}}{2}} cos \frac{{θ}_{L}}{2} {e}^{- {iLφ}_{T} \left(t\right)} \\ + A ′ * {e}^{i 2 π \left\{{f}_{c}\left({t}_{T}-{t}_{ref}\right)+μt\left({t}_{T}-{t}_{ref}\right)-\frac{LΩ}{4 π}\left(t-{t}_{T}\right)+\frac{μ}{2}\left({t}_{ref}^{2}-{t}_{T}^{2}\right)\right\}} {e}^{- i \frac{{ϕ}_{L}}{2}} sin \frac{{θ}_{L}}{2} {e}^{{iLφ}_{T} \left(t\right)}\end{matrix}$ (20)

The first frequency f1 (f+_{L}) and the second frequency f2 (f-_{L}) each obtained through the frequency analysis of the reception complex signal RCS (s₀(t)) are represented by (Numerical Expression 21). Here, the third term on the right side corresponds to a Doppler frequency fd with a time variation of the target object azimuth angle φ_{T}.
(Numerical Expression 21) ${f}_{\pm L} = μ \left({t}_{T}-{t}_{ref}\right) ∓ \frac{LΩ}{4 π} ∓ \frac{LΩ}{2 π} \frac{{dφ}_{T} \left(t\right)}{dt}$ (21)

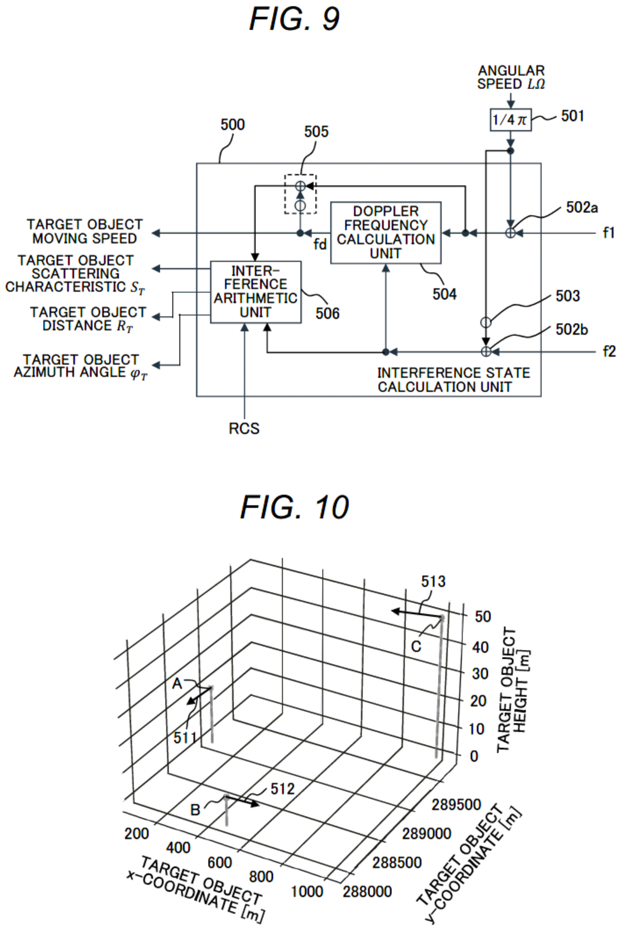

Fig. 9 illustrates a block diagram of an interference state calculation unit 500 according to the third embodiment. Shift calculation units 502 perform frequency shifts of each of the first frequency f1 and the second frequency f2 based on an angular speed LΩ multiplied by 1/4π by gain calculation 501. Specifically, a shift calculation unit 502a performs the frequency shift by which LΩ/4π is added to the first frequency f1, and a shift calculation unit 502b performs the frequency shift by which LΩ/4π is subtracted from the second frequency f2 via a negative sign calculator 503. A Doppler frequency calculation unit 504 calculates a Doppler frequency fd corresponding to the moving speed of the target object from a difference between the first frequency and the second frequency subjected to shift calculation.

An interference arithmetic unit 506 performs processing corresponding to the interference state calculation unit 112 in the first embodiment. While the interference state calculation unit 112 has performed the frequency shift for canceling out the frequency shift caused by the rotation operation of the superimposed state vector SV in order to set the first radio wave frequency component having the first frequency f+_{L} and the second radio wave frequency component having the second frequency f-_{L} at the same value, the interference arithmetic unit 506 performs the frequency shift to cancel out the Doppler frequency fd in addition thereto. Specifically, the interference arithmetic unit 506 determines the spectrum correlation between the first radio wave frequency component obtained through the frequency shift performed on the reception signal s_{R}(t) by the shift calculation unit 502a and through a Doppler shift performed on the reception signal s_{R}(t) by a Doppler shift calculation unit 505 and the second radio wave frequency component obtained through the frequency shift performed on the reception signal s_{R}(t) by the shift calculation unit 502b to thereby cause the first radio wave frequency component and the second radio wave frequency component to interfere with each other. Thus, in the same manner as in the first embodiment, it is possible to determine at least one of the scattering characteristic, the distance, and the azimuth angle.

Fig. 10 illustrates a result of analyzing scattered waves from the moving bodies (point scatterers) A, B, and C each having the target object azimuth angle φ_{T} that changes with the time t and calculating the three-dimensional positions (the second embodiment) and the moving speed (the third embodiment) of the target object. Vectors 511, 512, and 513 extending from the respective positions of the individual point scatterers indicate respective moving speeds of the individual point scatterers. This allows the calculation result to be used for more detailed infrastructure monitoring.

### Fourth Embodiment

In a fourth embodiment, a description will be given of the interferometric radar system 100 that further superimposes a plurality of the superimposed radio waves on each other, and emits the resulting superimposed radio waves via the antenna. A transmission arithmetic unit 600 in the fourth embodiment includes a plurality of superimposed state input units 601, rotation operation units 602, and complex signal conversion units 611, which perform the same functions as those performed by the superimposed state input unit 201, the rotation operation unit 202, and the complex signal conversion unit 211 in the first embodiment. Transmission complex signal vectors TCVₘ (m = 1 to M) generated in the individual complex signal conversion units 611 are added up by an adder 612 and output as the transmission complex signal vector TCV.

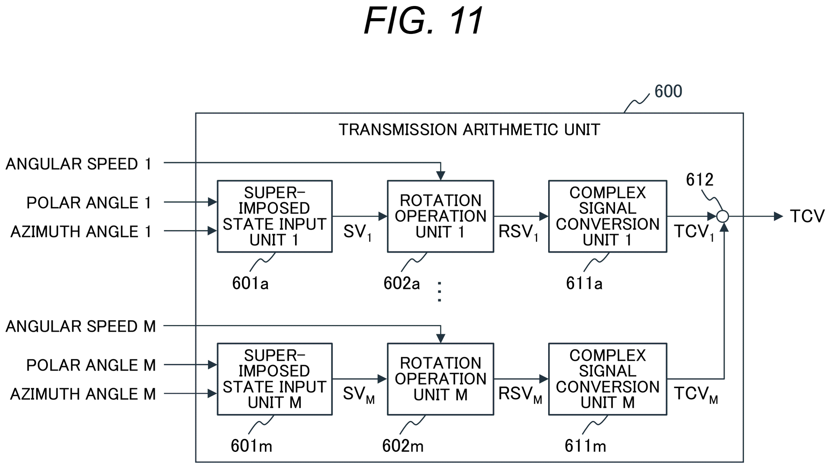

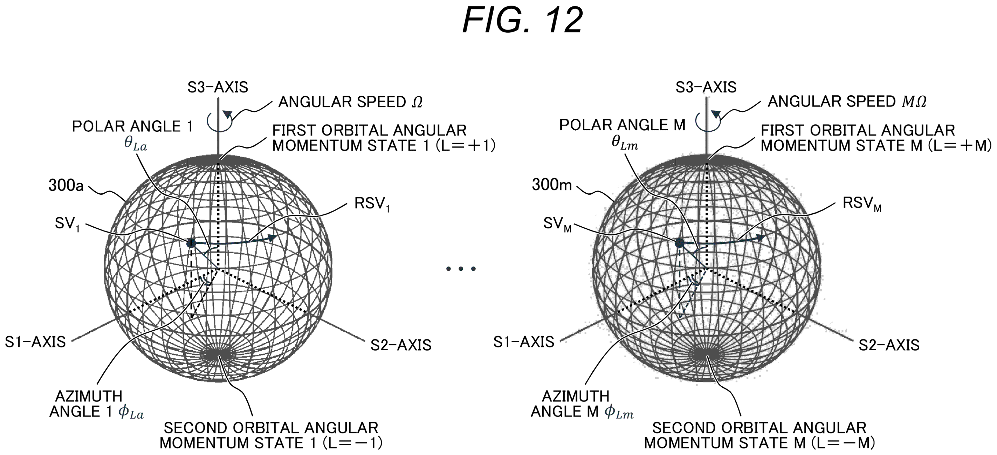

Orbital angular momentum states superimposed in the transmission arithmetic unit 600 in the fourth embodiment can be represented as a plurality of spherical surfaces shown in Fig. 12. It is assumed that the transmission arithmetic unit 600 includes sequences that generate the plurality of transmission complex signal vectors TCVₘ (m = 1 to M) shown in Fig. 11, and a spherical surface 300a represents a rotated superimposed state vector RSV₁ generated by a sequence 1, and a spherical surface 300m represents a rotated superimposed state vector RSV_{M} generated by a sequence M. For example, the spherical surface 300a is a spherical surface on which the first orbital angular momentum state with the OAM order L = +1 is disposed at the north pole, and the second orbital angular momentum state with the OAM order L = -1 is disposed at the south pole. The spherical surface 300m is a spherical surface on which the first orbital angular momentum state with the OAM order L = +M is disposed at the north pole, and the second orbital angular momentum state with the OAM order L = -M is disposed at the south pole. Depending on the order L, the input angular speed is set to Ω [rad/s] on the spherical surface 300a and to MΩ [rad/s] on the spherical surface M.

When the superimposed radio waves having been superimposed up to the OAM order L = ±1, ..., ±M are to be generated, the transmission signal vector TV to be fed to the radio wave transmission antenna 105 is given by (Numerical Expression 22) on the basis of (Numerical Expression 5) and (Numerical Expression 6).
(Numerical Expression 22) $\begin{matrix}{s}_{M} \left(t\right) = {e}^{i 2 π \left({f}_{c}t+\frac{μ}{2}{t}^{2}\right)} {\sum }_{L = 1}^{M} {IQ}_{L} {p}_{L} \left(t\right) \\ 0 \leq t \leq τ\end{matrix}$ (22)

When the target object is irradiated with the superimposed radio waves generated on the basis of (Numerical Expression 22), and the scattered waves are analyzed in the frequency analysis unit 113, the frequency shown in (Numerical Expression 23) is detected.
(Numerical Expression 23) ${f}_{\pm M} = μ \left({t}_{T}-{t}_{ref}\right) ∓ {\sum }_{L = 1}^{M} \frac{LΩ}{4 π}$ (23)

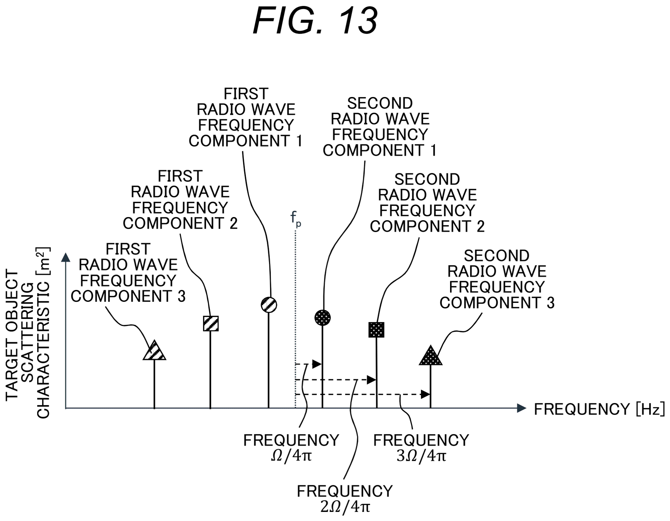

In (Numerical Expression 23), the first term on the right side is a frequency determined by the target object distance R_{T}, and the second term on the right side is a frequency according to the input angular speed. As a specific example, an example of the frequency detected by the frequency analysis unit 113 in the fourth embodiment is shown in Fig. 13.

Fig. 13 illustrates a result of performing frequency analysis of the scattered waves by irradiating the target object 10 with the superimposed radio waves generated on the basis of the three spherical surface representations with the OAM orders L = ±1, ±2, and ±3, in which the abscissa represents the frequency, and the ordinate represents the target object scattering characteristic S_{T}. As shown in Fig. 13, around the frequency fₚ determined by the target object distance R_{T}, the first radio wave frequency component and the second radio wave frequency component are generated at ±LΩ/4π [Hz]. In the amplitudes and phases of these frequency components, reflection characteristic and azimuth angle information of the target with respect to the orders of the OAM radio waves are reflected. Thus, by superimposing the plurality of OAM radio waves superimposing the different OAM orders on each other, irradiating the target object with the resulting superimposed OAM radio waves, and analyzing the scattered waves, the interferometric radar system 100 in the fourth embodiment is allowed to obtain details related to the scattering characteristic and the azimuth angle of the target object.

Hereinbelow, a description will be given of implementation forms of the interferometric radar system described by using the first embodiment to the fourth embodiment.

### (First Implementation Form)

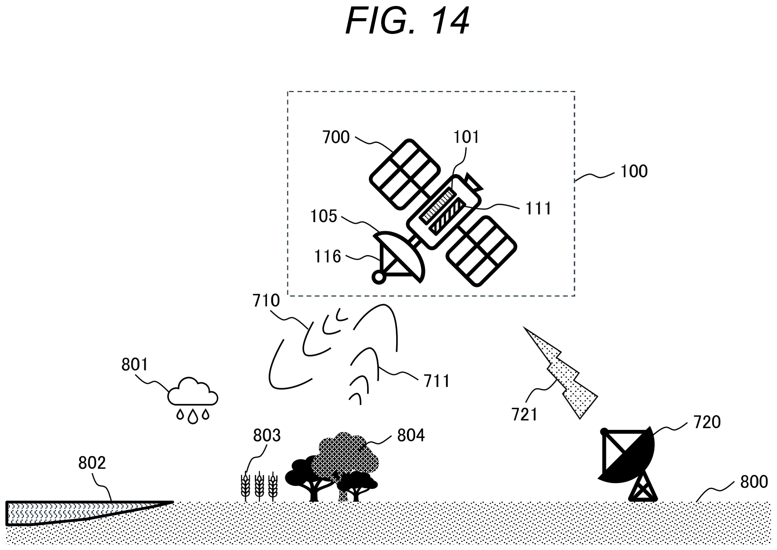

As the first implementation form, an example in which the interferometric radar system is implemented on a spacecraft is shown in Fig. 14. The transmission device 101 and the reception device 111 are included in a spacecraft 700 and, by emitting superimposed radio waves 710 from the radio wave transmission antenna 105 of the spacecraft 700 toward the earth 800 and receiving scattered waves 711 from the earth 800 via the radio wave reception antenna 116, observation data of the target object is obtained. The observation data 721 obtained by the interferometric radar system 100 is transmitted to the ground station 720. With the present configuration, it is possible to configure an interferometric radar system capable of wide-range sensing by transmitting the superimposed radio waves 710 from an outer space to a rain cloud 801, a river 802, an agricultural product 803, a forest 804, or the like serving as an observation target.

### (Second Implementation Form)

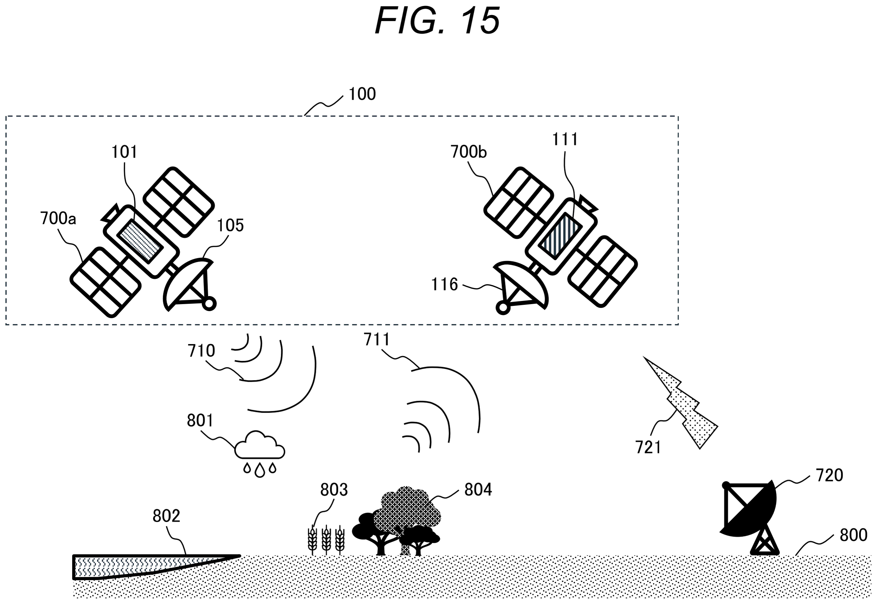

As the second implementation form, an example in which the interferometric radar system is implemented by a plurality of spacecrafts is shown in Fig. 15. The transmission device 101 is included in a first spacecraft 700a, and the reception device 111 is included in a second spacecraft 700b. By emitting the superimposed radio waves 710 from the radio wave transmission antenna 105 of the first spacecraft 700a toward the earth 800 and receiving the scattered waves 711 from the earth 800 via the radio wave reception antenna 116 of the second spacecraft 700b, observation data of the target object is obtained. The observation data 721 obtained by the interferometric radar system 100 is transmitted from the second spacecraft 700b to the ground station 720. In the present configuration, the superimposed radio waves 710 are transmitted from the outer space to the rain cloud 801, the river 802, the agricultural product 803, the forest 804, or the like serving as the observation target, and the scattered waves 711 are received at angles different from those used for transmission. Thus, it is possible to configure an interferometric radar system capable of obtaining information different from that obtained in the first implementation form by receiving radio waves containing, as main components, components other than the most intense reflected waves in the first implementation form, in addition to the wide-range sensing. Note that the spacecraft 700b including the reception device 111 is not limited to one spacecraft, and a plurality of the spacecrafts 700b may also be provided. In the case where the transmission device 101 and the reception device 111 are at different locations as in the present implementation form, the calculated target object distance and target object azimuth angle are the distance and the azimuth angle which are viewed from the reception device 111.

### (Third Implementation Form)

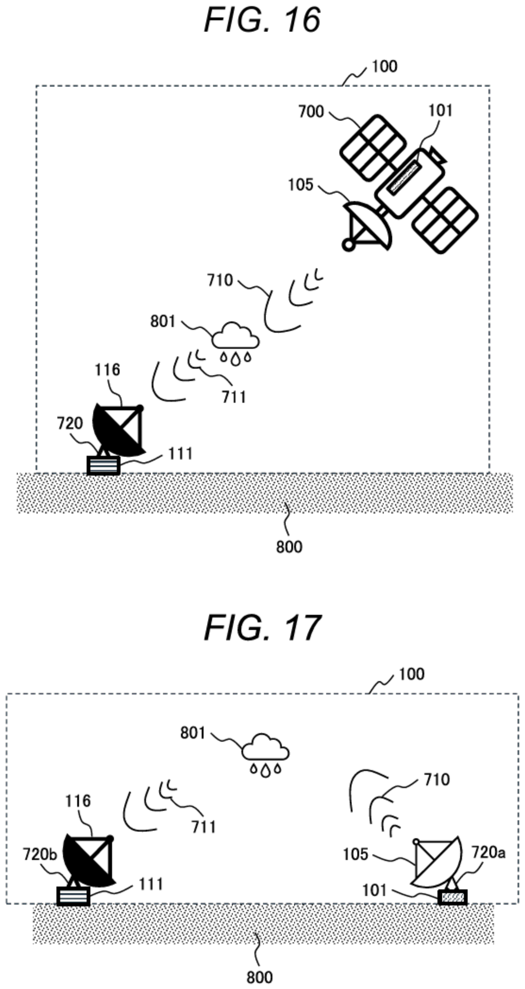

As the third implementation form, an example in which the interferometric radar system is implemented by the spacecraft and a ground station is shown in Fig. 16. The transmission device 101 is included in the spacecraft 700, and the reception device 111 is included in the ground station 720. The observation data of the target object is obtained by emitting the superimposed radio waves 710 from the radio wave transmission antenna 105 of the spacecraft 700 toward the earth 800 and receiving the scattered waves 711 from, e.g., the rain cloud 801 via the radio wave reception antenna 116 of the ground station 720. With the present configuration, it is possible to configure an interferometric radar system in which the observation data can directly be obtained by the ground station 720 from the rain cloud 801 or the like serving as the observation target. Note that the ground station 720 including the reception device 111 is not limited to one location, and the ground stations 720 may also be present at a plurality of locations. In the case where the transmission device 101 and the reception device 111 are at different locations as in the present implementation form, the calculated target object distance and target object azimuth angle are the distance and the azimuth angle which are viewed from the reception device 111.

### (Fourth Implementation Form)

As the fourth implementation form, an example in which the interferometric radar system is implemented by the ground station is shown in Fig. 17. The transmission device 101 is included in a ground station 720a, and the reception device 111 is included in a ground station 720b. The observation data of the target object is obtained by emitting the superimposed radio waves 710 from the radio wave transmission antenna 105 of the ground station 720a toward the sky, and receiving the scattered waves 711 from, e.g., the rain cloud 801 via the radio wave reception antenna 116 of the ground station 720b. With the present configuration, it is possible to configure an interferometric radar system capable of obtaining the observation data from the rain cloud 801 or the like serving as the observation target without using a spacecraft. Also, in the present implementation aspect, the ground station 720b including the reception device 111 is not limited to one location, and the ground stations 720b may also be present at a plurality of locations. In the case where the transmission device 101 and the reception device 111 are at different locations as in the present implementation form, the calculated target object distance and target object azimuth angle are the distance and the azimuth angle which are viewed from the reception device 111.

It should be noted that the present invention is not limited to the embodiments described above, and includes various modifications. For example, the examples described above have been described in detail to simply describe the present disclosure, and are not necessarily required to include all the described configurations. In addition, part of the configuration of one embodiment and one modification can be replaced with the configurations of other embodiments and modification, and in addition, the configuration of the one embodiment and one modification can also be added with the configurations of other embodiments and modifications. In addition, part of the configuration of each of the embodiments and the modifications can be subjected to addition, deletion, and replacement with respect to other configurations.

Alternatively, the functional units described as being implemented by the software program may also be implemented by hardware by, e.g., designing some or all thereof by using, e.g., integrated circuits. Information on programs, tables, files, and the like that implement the individual functions can be stored in a recording device such as a memory, a hard disk, or a SSD (Solid State Drive) or a recording medium such as an IC card, a memory card, or an optical disk.

### REFERENCE SIGNS LIST

10: target object, 100: interferometric radar system, 101: transmission device, 102: transmission arithmetic unit, 103: chirp signal generator, 104: transmission multiplier, 105: radio wave transmission antenna, 111: reception device, 112: interference state calculation unit, 113: frequency analysis unit, 114: chirp signal generator, 115: reception multiplier, 116: radio wave reception antenna, 117: target object height calculation unit, 200: information processing device, 201: superimposed state input unit, 202: rotation operation unit, 210: digital front end, 211: complex signal conversion unit, 300: spherical surface, 400: antenna, 500: interference state calculation unit, 501: gain calculation, 502: shift calculation unit, 503: negative sign calculator, 504: Doppler frequency calculation unit, 505: Doppler shift calculation unit, 506: interference calculation unit, 511, 512, 513: vector, 600: transmission arithmetic unit, 601: superimposed state input unit, 602: rotation operation unit, 611: complex signal conversion unit, 612: adder, 700: spacecraft, 710: superimposed radio wave, 711: scattered wave, 720: ground station, 721: observation data, 800: earth, 801: rain cloud, 803: agricultural product, 804: forest

## Claims

1. An interferometric radar system comprising:
a transmission device that emits superimposed radio waves obtained by superimposing a first radio wave having a first orbital angular momentum and a second radio wave having a second orbital angular momentum different in OAM order from the first orbital angular momentum on each other; and
a reception device that receives scattered waves, which are the superimposed radio waves emitted to irradiate a target object and scattered thereby, calculates an interference state between a first radio wave component corresponding to the scattered wave of the first radio wave and a second radio wave component corresponding to the scattered wave of the second radio wave in the scattered waves, and calculates at least one of a scattering characteristic, a distance, and an azimuth angle of the target object.

2. The interferometric radar system according to claim 1,
wherein the transmission device includes:
a transmission arithmetic unit that generates a transmission complex signal vector representing a superimposed state of the first radio wave and the second radio wave;
a transmission multiplier that multiplies the transmission complex signal vector by a chirp signal having a time-varying frequency to generate a transmission signal vector; and
a radio wave transmission antenna that emits the transmission signal vector as the superimposed radio waves.

3. The interferometric radar system according to claim 2,
wherein the transmission arithmetic unit includes:
a superimposed state input unit that receives inputs of a polar angle and an azimuth angle on a spherical surface on which a first orbital angular momentum state is disposed at a north pole and a second orbital angular momentum state is disposed at a south pole to generate a superimposed state vector representing the superimposed state of the first radio wave and the second radio wave;
a rotation operation unit that receives an input of an angular speed to generate a rotated superimposed state vector by rotating the superimposed state vector at the angular speed in an equator direction of the spherical surface; and
a complex signal conversion unit that converts the rotated superimposed state vector to the transmission complex signal vector according to the radio wave transmission antenna.

4. The interferometric radar system according to claim 3,
wherein the reception device includes:
a radio wave reception antenna that receives the scattered waves;
a reception multiplier that multiplies a reception signal received by the radio wave reception antenna by the chirp signal to generate a reception complex signal;
a frequency analysis unit that performs frequency analysis of the reception complex signal to determine a first frequency corresponding to the scattered wave of the first radio wave and a second frequency corresponding to the scattered wave of the second radio wave; and
an interference state calculation unit that shifts a first radio wave frequency component having the first frequency and a second radio wave frequency component having the second frequency in the reception complex signal such that each of the first frequency and the second frequency has the same value, and thereby calculates the interference state between the first radio wave frequency component and the second radio wave frequency component.

5. The interferometric radar system according to claim 4,
wherein the interference state calculation unit calculates spectrum correlation between the first radio wave frequency component and the second radio wave frequency component which have been shifted such that each of the first frequency and the second frequency has the same value, and calculates at least one of the scattering characteristic, the distance, and the azimuth angle of the target object on the basis of the spectrum correlation and a peak frequency calculated by the frequency analysis unit.

6. The interferometric radar system according to claim 4,
wherein the reception device includes:
a target object height calculation unit that determines a height of the target object on the basis of the distance and the azimuth angle of the target object and a height and a viewing angle of the transmission device.

7. The interferometric radar system according to claim 4,
wherein the target object is a moving body having a time-varying azimuth angle, and
wherein the interference state calculation unit calculates a Doppler frequency on the basis of the first frequency and the second frequency.

8. The interferometric radar system according to claim 3,
wherein the transmission arithmetic unit includes:
a plurality of sequences each including the respective superimposed state input units, the respective rotation operation units, and the respective complex signal conversion units to output the transmission complex signal vectors; and
an adder that adds up the transmission complex signal vectors output from the plurality of sequences, and wherein the plurality of sequences generate the superimposed radio waves on the basis of spherical surface representations with different OAM orders.

9. The interferometric radar system according to claim 1,
wherein the transmission device and the reception device are provided in a spacecraft, and
wherein the spacecraft transmits, to a ground station, observation data including at least one of the scattering characteristic, the distance, and the azimuth angle of the target object.

10. The interferometric radar system according to claim 1,
wherein the transmission device is provided in a first spacecraft, and the reception device is provided in a second spacecraft, and
wherein the second spacecraft transmits, to a ground station, observation data including at least one of the scattering characteristic, the distance, and the azimuth angle of the target object.

11. The interferometric radar system according to claim 1,
wherein the transmission device is provided in a spacecraft, and the reception device is provided in a ground station.

12. The interferometric radar system according to claim 1,
wherein the transmission device is provided in a first ground station, and the reception device is provided in a second ground station.

13. A reception device comprising:
a radio wave reception antenna that receives scattered waves, which are superimposed radio waves obtained by superimposing a first radio wave having a first orbital angular momentum and a second radio wave having a second orbital angular momentum different in OAM order from the first orbital angular momentum on each other, emitted to irradiate a target object, and scattered thereby,
wherein the reception device calculates an interference state between a first radio wave component corresponding to the scattered wave of the first radio wave and a second radio wave component corresponding to the scattered wave of the second radio wave in the scattered waves, and calculates at least one of a scattering characteristic, a distance, and an azimuth angle of the target object.

14. The reception device according to claim 13,
wherein a transmission device including a radio wave transmission antenna rotates a superimposed state vector representing a superimposed state of the first radio wave and the second radio wave on a spherical surface on which a first orbital angular momentum state is disposed at a north pole and a second orbital angular momentum state is disposed at a south pole at a predetermined angular speed in an equator direction of the spherical surface to generate a rotated superimposed state vector, converts the rotated superimposed state vector to a transmission complex signal vector according to the radio wave transmission antenna, and multiplies the transmission complex signal vector by a chirp signal having a time-varying frequency to generate a transmission signal vector, and the superimposed radio waves are radio waves resulting from emission of the transmission signal vector from the transmission device via the radio wave transmission antenna.

15. The reception device according to claim 14, further comprising:
a reception multiplier that multiplies a reception signal received by the radio wave reception antenna by the chirp signal to generate a reception complex signal;
a frequency analysis unit that performs frequency analysis of the reception complex signal to determine a first frequency corresponding to the scattered wave of the first radio wave and a second frequency corresponding to the scattered wave of the second radio wave; and
an interference state calculation unit that shifts a first radio wave frequency component having the first frequency and a second radio wave frequency component having the second frequency in the reception complex signal such that each of the first frequency and the second frequency has the same value, and thereby calculates the interference state between the first radio wave frequency component and the second radio wave frequency component.
